# EUROPÄISCHE PATENTSCHRIFT

(11) **EP 1 032 848 B1**
(45) Veröffentlichungstag und Bekanntmachung des Hinweises auf die Patenterteilung: **12.09.2001**
(21) Anmeldenummer: 98963341.7
(22) Anmeldetag: 12.11.1998
(51) Int. Cl.: G01S 13/93, G01S 7/40

(54) **VERFAHREN ZUR VERARBEITUNG VON RADARSIGNALEN**
METHOD FOR PROCESSING RADAR SIGNALS
PROCEDE DE TRAITEMENT DE SIGNAUX RADAR

(30) Priorität: 18.11.1997 DE 19751004
(43) Veröffentlichungstag der Anmeldung: 06.09.2000
(73) Patentinhaber: DaimlerChrysler AG, 70567 Stuttgart (DE)
(72) Erfinder: SCHNEIDER, Robert, D-89233 Neu-Ulm (DE)
(86) Internationale Anmeldenummer: DE9803315
(87) Internationale Veröffentlichungsnummer: WO9926082

(56) Entgegenhaltungen:
- US-A- 5 495 254
- US-A- 5 670 963

## Beschreibung

Die Erfindung betrifft ein Verfahren zur Verarbeitung von Radarsignalen nach dem Oberbegriff des Patentanspruchs 1.

Radaranordnungen, die relativ zu ihrer Umgebung bewegt sind, sind bespielsweise Fahrzeugradaranordnungen, insbesondere in Straßenfahrzeugen. Die Radaranordnungen überwachen dabei typischerweise einen in Hauptfahrtrichtung liegenden Raumbereich und erfassen darin befindliche reflektierende Objekte nach Entfernung und Winkel bezüglich der Radaranordnung. Dabei wird im Regelfall angenommen, daß die Ausrichtung der Bezugsachse der Radaranordnung, auf welche die Einfallswinkel von Radarechos bezogen werden, parallel zu der Hauptbewegungsrichtung des die Anordnung tragenden Fahrzeugs ist. Diese Hauptbewegungsrichtung ist normalerweise die Geradeausfahrt.

Die Annahme der zur Geradeausfahrtrichtung parallelen Ausrichtung der Bezugsachse der Radaranordnung ist im praktischen Fall lediglich annähernd erfüllt. Eine exakte Ausrichtung ist aufwendig und erfordert spezielle Einrichtungen und Kenntnisse. Darüberhinaus kann sich eine einmal vorgenommene Einstellung insbesondere durch mechanische Einwirkung verändern.

Die beim Radarbetrieb gemessenen Winkelablagen der reflektierenden Objekte sind daher im Regelfall mit einem mehr oder weniger starken Winkelfehlet entsprechend der Winkeldifferenz von Ausrichtung der Radaranordnung gegen die Hauptbewegungsrichtung des Fahrzeugs behaftet. Eine stark verfälschte Ausrichtung kann darüberhinaus bedeuten, daß ein wesentlicher Umgebungsabschnitt nicht mehr vom Überwachungsbereich der Radaranordnung erfaßt wird.

Aus der Schrift US-A-5 495 254 ist ein Verfahren bekannt, welches es ermöglicht einen horizontalen Ausrichtungsfehler einer Fahrzeugradaranordung zu erkennen. Dabei wird für alle Orte der von der Radaranordnung erfaßten Objekte ein gemeinsamer Schwerpunkt bestimmt. Durch periodisches Errechnen dieses Schwerpunktes wird dessen Spur erzeugt und zur Bestimmung eines evtl. Ausrichtungsfehlers der Radaranordnung herangezogen (Spalte 6, Zeile 65 - Spalte 7, Zeile 7). In der praktischen Anwendung wirkt sich dabei negativ aus, daß die Auswertung der Spur des Schwerpunktes nur für den Fall sinnvolle Ergebnisse liefert, für welchen die Orte der detektierten Objekte bezüglich der Ausrichtung der Radaranordnung zumindest annähernd einer Gauss-Verteilung entsprechen. Um dies zu erreichen, ist es notwendig eine Vielzahl von Reflektoren an beiden Straßenrändern in einem vorbestimmten Intervall vorzusehen.

Der vorliegenden Erfindung liegt die Aufgabe zugrunde, mit geringem Aufwand die Zuverlässigkeit einer genauen Bestimmung von Zielwinkeln zu erreichen und die Ausrichtung einer Radaranordnung zu überwachen bzw. zu korrigieren.

Die Erfindung ist im Patentanspruch 1 beschrieben. Die Unteransprüche enthalten vorteilhafte Ausgestaltungen und Weiterbildungen der Erfindung.

Die Erfindung ermöglicht mit der Bestimmung einer evtl. vorhandenen Abweichung zwischen Ausrichtung der Radaranordnung und tatsächlicher Bewegungsrichtung zum einen eine Überwachung auf eine eventuell unzulässig große solche Abweichung mit Erzeugung eines Warnsignals und zum anderen eine Korrektur gemessener Zielwinkel. Mit Ausrichtung der Radaranordnung sei dabei hier und im folgenden eine Vorzugsrichtung des winkelaufgelösten Diagramms einer Radarantenne, beispielsweise die Richtung des Diagrammaximums oder die Richtung einer Symmetrieebene des Diagramms, und mit Bewegungsrichtung die Hauptbewegungsrichtung eines Trägers der Radaranordnung, insbesondere eine Geradeausfahrtrichtung eines Fahrzeugs bezeichnet, wobei idealer Weise die Ausrichtung und die Bewegungsrichtung zusammenfallen oder einen definierten Winkel zwischen sich einschließen sollen.

Die Erfindung geht von einer Winkelauflösung in zumindest einer Dimension aus, wobei im realen Fall insbesondere eine Winkelauflösung in der Horizontalen (Azimut) interessant ist. Zusammen mit der Entfemungsauflösung des Radars ergibt sich eine zumindest zweidimensionale Auflösung. Eine solche zweidimensionale Auflösung kann in einem Flächenkoordinatensystem dargestellt werden, das bezüglich der Radaranordnung fest ist. Bei der Relativbewegung von Radaranordnung und Umgebung verschieben sich die Positionen der von der Radaranordnung erfaßten Objekte in dem Koordinatensystem. Diese Verschiebungen können durch an sich in verschiedener Form bekannte spurbildende Algorithmen erfaßt und durch Objektspuren (Trajektorien) beschrieben werden. Die Objektspuren sind im einfachsten Fall gerade Verbindungen zwischen einer Anfangs- und einer Endposition innerhalb eines Beobachtungs-Zeitfensters, können aber in genauerer Beschreibung der Relativbewegung auch gekrümmte Linien sein. Ohne darauf beschränkt zu sein, ist die Erfindung nachfolgend unter der Annahme des Vorliegens gerader Objektspuren weiterbeschrieben. Gekrümmte Linien können auch beispielsweise über lineare Regression oder als Bogensehnen auf Darstellungen als gerade Linien abgebildet werden.

Als von der Radaranordnung erfaßte Objekte kommen bei einer Straßenfahrzeug-Radaranordnung insbesondere andere Fahrzeuge, Straßenrand, Markierungen, Leitplanken, Hindernisse oder auch reflektierende Objekte außerhalb des interessierenden Fahrbahnbereichs in Betracht. Bei der Darstellung in dem bezüglich der Radaranordnung festen Koordinatensystem verschieben sich die Positionen dieser Objekte auf Trajektorien, denen in Form von Winkeln gegen eine Bezugsachse, insbesondere gegen die Ausrichtung der Radaranordnungen, Richtungen zugewiesen werden können. Durch Auswertung einer Mehrzahl solcher Trajektorien kann eine mittlere Hauptbewegungsrichtung zwischen den Objekten und der Radaranordnung ermittelt werden.

Die Auswertung kann durch statistische Bewertung der Verteilung der Richtungen (Winkeln) der erfaßten Trajektorien, vorzugsweise durch Mittelwertbildung erfolgen. Besonders vorteilhaft ist eine fortlaufende rekursive Mittelwertbildung. Die Bewertungszeit für eine Mittelwertbildung oder andere statistische Auswertung ist so groß gewählt, daß auch besondere Situationen wie Kurvenfahrten eines Straßenfahrzeugs zu keiner nennenswerten Verfälschung des ermittelten Werts für die Bewegungsrichtung führen. Bei Auswertung innerhalb eines festen Zeitfensters kann dies beispielsweise durch eine Mindest-Fahrstrecke oder Fahrzeit gegeben sein. Bei rekursiver Verknüpfung neuer Richtungswerte mit einem zuvor gültigen Wert für die Bewegungsrichtung ist der Gewichtungsfaktor für die neuen Werte entsprechend niedrig, vorzugsweise kleiner als 1‰ zu wählen.

Für die Auswertung können die Trajektorien aller erfaßten Objekte herangezogen werden. Bei hoher Integrationszeit fallen dann auch einzelne verfälschende Werte wie beispielsweise die Spur eines an einer Kreuzung quer fahrenden anderen Fahrzeugs nicht sonderlich ins Gewicht. Es kann jedoch auch eine Vorauswahl über die zur Auswertung heranzuziehenden Trajektorien bzw. Objekte getroffen werden. Ein solches Auswahlkriterium kann beispielsweise eine Abweichung der Richtung einer Trajektorie von der Ausrichtung der Radaranordnung oder der zuletzt ermittelten Bewegungsrichtung unterhalb eines Maximalwerts von z.B. 5° sein. Es kann ferner eine Beschränkung auf Objekte mit einem Mindestwert der Relativgeschwindigkeit oder auf Objekte, die sich auf die Radaranordnung zu bewegen, vorgenommen werden.

Die durch Auswertung der Trajektorien bestimmte Bewegungsrichtung zeigt eine mehr oder weniger starke Winkelabweichung gegen die Ausrichtung der Radaranordnung. Lediglich im Falle einer ideal ausgerichteten Radaranordnung wird diese Winkelabweichung zu Null.

Nach Kenntnis der Winkelabweichung ist eine Korrektur der mit der Winkel-auflösung der Radaranordnung gewonnen Winkel der erfaßten Objekte durch Bezug auf die Hauptbewegungsrichtung einfach möglich und führt zu einer präzisen Winkelangabe bezüglich der Hauptbewegungsrichtung. Bei unzulässig großer Winkelabweichung ist eine mechanische Nachjustierung erforderlich. aus der Feststellung einer solchen unzulässigen Winkelabweichung kann ein Warn- oder Alarmsignal abgeleitet werden.

Eine Winkelauflösung der Radaranordnung kann auch in zwei Dimensionen beispielsweise Azimut und Elevation gegeben sein. Die Winkelauflösung der Radaranordnung kann sowohl durch eine reale als auch durch eine synthetische Apertur realisiert sein. In einer minimalen Konfiguration wird eine Aufteilung in nur zwei Richtungssegmente wie z.B. bei Monoplus-Anordnungen angenommen. Vorzugsweise ist aber die Winkelauflösung insbesondere im Azimut besser als 5°, vorzugsweise besser als 2 ° je Winkelsegment.

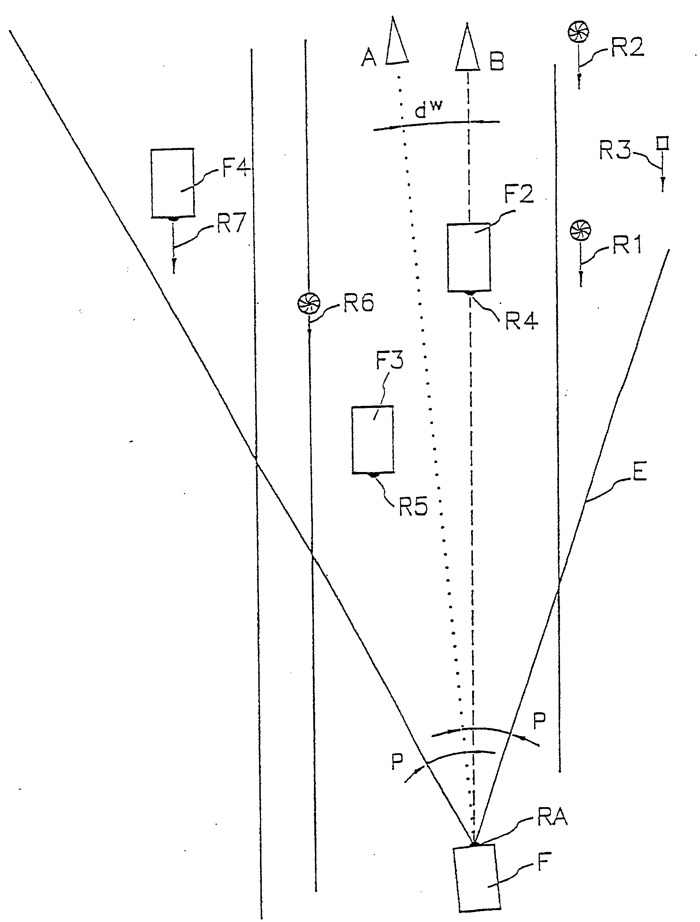

Die Erfindung ist nachfolgend anhand der Abbildung noch weiter veranschaulicht. Die Abbildung zeigt eine Verkehrssituation, bei welcher sich ein Fahrzeug F, welches in seinem Frontbereich eine Radaranordnung RA trägt, auf einem geraden Abschnitt einer mehrspurigen Fahrbahn fortbewegt. Die Bewegungsrichtung ist mit B bezeichnet und als unterbrochene Linie eingetragen. Die beispielsweise durch die Hauptstrahlrichtung eines symmetrischen Antennendiagramms gebildete Ausrichtung A der Radaranordnung ist als punktierte Linie eingezeichnet und zeigt eine Winkelabweichung dW gegenüber der Bewegungsrichtung. Diese Winkelabweichung sei a priori unbekannt. Der Erfassungsbereich E des Antennendiagramms erstrecke sich über einen Winkelbereich P von beispielsweise 30° in der Horizontalen nach beiden Seiten der Ausrichtung A. In dem Erfassungsbereich E sind eine Mehrzahl von Objekten eingetragen, die bei der Spurbildung über ein vorgegebenes Zeitfenster die eingetragenen Trajektorien R1 bis R7 aufweisen.

Die Trajektorien R1 und R2 können beispielsweise von Begrenzungsmarkierungen des rechten Straßenrandes, die Trajektorie R6 von einer Trennmarkierung gegen die Gegenverkehr-Fahrbahn, die Trajektorie R3 von einem nicht verkehrsrelevanten Objekt außerhalb des Fahrbahnbereiches, die Trajektorien R4, R5, R7 von anderen Fahrzeugen herrühren.

Die Trajektorien zu feststehenden Objekten bilden in der bezüglich der Radaranordnung RA festen Koordinatendarstellung Geradenabschnitte, die entsprechend der Fahrgeschwindigkeit des Fahrzeugs F ungefähr die gleiche Länge aufweisen und mit der Ausrichtung A im wesentlichen gleiche Winkel einschließen. Die Reflexionen von feststehenden Objekten bilden daher eine besonders günstige Grundlage für die Ermittlung einer mittleren Bewegungsrichtung. Die Auswertung der Trajektorien kann beispielsweise auf die Trajektorien solcher feststehender Objekte beschränkt werden. Das Fahrzeug F2 sei als mit konstantem Abstand gegenüber dem Fahrzeug F vorausfahrend angenommen. Seine Position relativ zu dem Fahrzeug F bzw. der Radaranordnung RA ändert sich daher nicht, und die Trajektorie R4 entartet zu einem Punkt Ein auf der Überholspur fahrendes Fahrzeug F3 fahre geringfügig schneller als das Fahrzeug F in gleicher Fahrtrichtung. Die zugeordnete Trajektorie R5 ist bei geringerem Geschwindigkeitsunterschied nur kurz und damit unter Umständen in der ermittelten Richtung dieser Trajektorie nicht sehr verläßlich. Trajektorien kurzer Länge könnten daher auch von der Auswertung ausgeschlossen oder mit einem geringeren Gewichtsfaktor beispielsweise proportional der Trajek-torienlänge berücksichtigt werden.

Das auf der Gegenfahrbahn entgegenkommende Fahrzeug F4 zeigt aufgrund der Fortbewegung in Gegenrichtung eine hohe Relativgeschwindigkeit und eine Trajektorie R7 mit gegenüber den anderen beschriebenen Objekten deutlich größerer Trajektorienlänge. Durch Mittelwertbildung aus den Winkeln aller oder ausgewählter Trajektorien gegen eine Bezugsachse in dem Koordinatensystem kann ein mittlerer Winkel aller Trajektorien bestimmt und als eigentliche aktuelle Bewegungsrichtung angenommen werden, die bei ausreichend großer Zahl berücksichtigter Trajektorien mit hoher Genauigkeit mit der tatsächlichen Bewegungsrichtung B zusammenfällt.

Im Regelfall sind die Trajektorien durch Schätzfehler und aufgrund der begrenzten Auflösung mit statistischen Schwankungen behaftet, die sich aber bei der Auswertung im Mittel ausgleichen und daher zu keiner wesentlich veränderten Betrachtung Anlaß geben.

Die Erfindung ist nicht auf die beschriebenen Ausführungsformen beschränkt, sondern im Rahmen fachmännischen Könnens in verschiedener Weise variierbar. insbesondere ist das Verfahren in verschiedenen anderen Umgebungen wie beispielsweise Schienenverkehr, Binnenschiffahrt, Flughafen-Rollbahnen, allgemein allen Einsatzgebieten autonomen Verkehrs vorteilhaft anwendbar. Das Verfahren kann zur Kalibration in verschiedenen winkelaufgelösten Positionen, insbesondere Azimut und Elevation eingesetzt werden und dabei jeden beliebigen Winkel zwischen Ausrichtung der Radaranordnung und Bewegungsrichtung des Trägers verifizieren.

## Patentansprüche

1. Verfahren zur Verarbeitung von Radarsignalen bei einer Radaranordnung, die relativ zu ihrer Umgebung bewegt ist und Radar-Echos von Objekten aus der Umgebung mit Winkelauflösung empfängt, **dadurch gekennzeichnet**, daß aus zeitlich aufeinanderfolgenden Objektdaten Objektspuren (Trajektorien) gebildet werden, und durch Auswertung mehrerer Objektspuren eine Bewegungsrichtung relativ zur Ausrichtung der Radaranordnung bestimmt wird.

2. Verfahren nach Anspruch 1, **dadurch gekennzeichnet, daß** die Auswertung der Objektspuren eine Mittelwertbildung der Spurrichtungen umfaßt, und der gebildete Mittelwert als Bewegungsrichtung angenommen wird.

3. Verfahren nach Anspruch 2, **dadurch gekennzeichnet, daß** die Mittelwertbildung rekursiv erfolgt.

4. Verfahren nach einem der Ansprüche 1 bis 3, **dadurch gekennzeichnet, daß** die Objektspuren als Geradenabschnitte gebildet werden.

5. Verfahren nach einem der Ansprüche 1 bis 4, **dadurch gekennzeichnet, daß** bei der Auswertung der Objektspuren nur solche Objektspuren berücksichtigt werden, deren Spurrichtung innerhalb eines vorgebbaren Richtungsfens-ters liegt.

6. Verfahren nach einem der Ansprüche 1 bis 5, **dadurch gekennzeichnet, daß** für die weitere Radarsignalverarbeitung die Einfallswinkel auf die Bewegungsrichtung bezogen werden.

7. Verfahren nach einem der Ansprüche 1 bis 6, **gekennzeichnet durch** die Anwendung in einer Fahrzeugradaranordnung, insbesondere einer Straßenfahrzeug-Radaranordnung.

## Claims

1. Method for processing radar signals in a radar arrangement which can move relative to its environment and receives radar echoes from objects from the environment with angular resolution, **characterized in that** successive object data items are used to form object tracks (trajectories), and a movement direction relative to the alignment of the radar arrangement is determined by evaluation of a number of object tracks.

2. Method according to Claim 1, **characterized in that** the evaluation of the object tracks comprises forming a mean value of the track directions, and the mean value which is formed is assumed to be the movement direction.

3. Method according to Claim 2, **characterized in that** the mean value is formed recursively.

4. Method according to one of Claims 1 to 3, **characterized in that** the object tracks are formed as straight-line sections.

5. Method according to one of Claims 1 to 4, **characterized in that** the evaluation of the object tracks takes account only of those object tracks whose track direction is within a direction window which can be predetermined.

6. Method according to one of Claims 1 to 5, **characterized in that**, for further radar signal processing, the incidence angles are related to the movement direction.

7. Method according to one of Claims 1 to 6, **characterized by** use in a vehicle radar arrangement, in particular in a road vehicle radar arrangement.

## Revendications

1. Procédé de traitement de signaux radar dans une installation radar qui se déplace par rapport à son environnement et qui reçoit des échos radar d'objets de l'environnement avec une résolution angulaire, **caractérisé en ce que** des traces d'objets (trajectoires) sont formées à partir de données d'objets successives et en ce qu'une direction de déplacement est définie par rapport à l'orientation de l'installation radar par l'exploitation de plusieurs traces d'objets.

2. Procédé selon la revendication 1, **caractérisé en ce que** l'exploitation des traces d'objets englobe la formation d'une valeur moyenne des directions des traces et que la valeur moyenne formée est admise comme direction de déplacement.

3. Procédé selon la revendication 2, **caractérisé en ce que** la formation de la valeur moyenne s'effectue de manière récursive.

4. Procédé selon l'une des revendications 1 à 3, **caractérisé en ce que** les traces d'objets sont formées en tant que segments rectilignes.

5. Procédé selon l'une des revendications 1 à 4, **caractérisé en ce que** lors de l'exploitation des traces d'objets, seules sont considérées les traces d'objets dont la direction des traces se trouve à l'intérieur d'une fenêtre de direction pouvant être prédéfinie.

6. Procédé selon l'une des revendications 1 à 5, **caractérisé en ce que** pour l'exploitation ultérieure des signaux radar, les angles d'incidence s'appliquent à la direction de déplacement.

7. Procédé selon l'une des revendications 1 à 6, **caractérisé par** l'application dans une installation radar de véhicule, en particulier une installation radar de voiture.
